# EUROPÄISCHE PATENTSCHRIFT

(11) **EP 0 561 176 B1**
(45) Veröffentlichungstag und Bekanntmachung des Hinweises auf die Patenterteilung: **12.07.1995**
(21) Anmeldenummer: 93102707.2
(22) Anmeldetag: 20.02.1993
(51) Int. Cl.: B60C 9/22, B60C 9/26

(54) **Fahrzeugluftreifen**
Pneumatic vehicle tyre
Bandage pneumatique pour véhicules

(30) Priorität: 19.03.1992 DE 4208860
(43) Veröffentlichungstag der Anmeldung: 22.09.1993
(73) Patentinhaber: Continental Aktiengesellschaft, 30165 Hannover (DE)
(72) Erfinder: Flebbe, Werner, W-3057 Neustadt a. Rbge (DE); Frerichs, Udo, W-3012 Langenhagen (DE); Johannes, Günter, W-3008 Garbsen 2 (DE); Kachel, Uwe, W-3174 Meine (DE); Knauf, Werner, W-3050 Wunstorf 1 (DE); Peda, Karl, W-3050 Wunstorf 1 (DE); Petersmann, Norbert, Dr., W-3000 Hannover 91 (DE)

(56) Entgegenhaltungen:
- EP-A- 0 305 558
- EP-A- 0 400 859
- EP-A- 0 455 454
- GB-A- 2 061 202
- GB-A- 2 253 818

## Beschreibung

Die Erfindung betrifft einen Fahrzeugluftreifen mit einer Karkasse, die in den Wülsten durch Umschlingen zugfester Wulstkerne verankert ist, mit einem mehrlagigen Verstärkungsgürtel und mit zumindest zwei durch Spulung streifenförmigen Materials erzeugten Wickelbandagen.

Es sind Fahrzeugluftreifen bekannt, bei denen die Wickelbandagen in Form von Kantenbandagen vorliegen und die Bereiche der beiden Gürtelränder abdecken. Es sind weiterhin ein- und mehrlagige Wickelbandagen bekannt, die sich über die gesamte Gürtelbreite erstrecken.

Aus EP-A-0 305 558 ist ein Fahrzeugluftreifen gemäß der Oberbegriff des Anspruchs 1 bekannt.

Der Erfindung liegt die Aufgabe zugrunde, einen verbesserten Reifen mit einer Wickelbandage anzugeben, die die Gürtelränder besser fesselt.

Diese Aufgabe wird erfindungsgemäß dadurch gelöst, daß die beiden Wickelbandagen die beiden Ränder von zumindest einer Gürtellage umfassen.

Mit der Erfindung erzielt man den Vorteil, daß die Ränder einzelner Gürtellagen oder des gesamten Gürtels in ihrer Lage besser fixiert werden. Die Einfassung einer Gürtellage mit Wickelbandagen erfolgt in der Weise, daß zunächst der radial innere Teil der beiden Wickelbandagen erzeugt wird, wobei jeweils der Anfang axial innen liegt und nach axial außen gewickelt wird, daß danach die einzufassende Gürtellage aufgelegt wird und anschließend zur Vervollständigung der beiden Wickelbandagen radial außen von der Gürtellage von axial außen nach axial innen gewickelt wird. Bei bestimmten Varianten beginnt man mit dem Wickeln radial innen von der einzufassenden Gürtellage in einem Bereich, der sich im axial äußeren Drittel der Gürtelbreite befindet. Auch das Ende der beiden Wickelbandagen kann sich in diesem axial äußeren Bereich befinden. Bei anderen Varianten beginnt man mit dem Wickeln etwa in der Mitte der Gürtelbreite und endet radial außen von der einzufassenden Gürtellage entweder im axial äußeren Drittel der Gürtelbreite oder aber auch in der Gürtelmitte.

Als Streifenmaterial für die Wickelbandagen kommt gummierter Nyloncord in Frage, wobei die Streifenbreite zwischen 8 und 25 mm liegen kann und die in Längsrichtung des Streifens verlaufenden Nylonfäden in einer Dichte von 6 bis 15 Fäden pro 10 mm Streifenbreite vorhanden sein können.

Nachfolgend wird die Erfindung anhand mehrerer Ausführungsbeispiele näher erläutert. Es zeigt
- Fig. 1: einen Fahrzeugluftreifen, bei dem die radial äußere Gürtellage von zwei Kantenbandagen eingefaßt wird, in einem radialen Teilschnitt,
- Fig. 2 bis 7: in schematischer Darstellung weitere Anordnungen von Wickelbandagen, die zum Teil eine Gürtellage, zum Teil auch den gesamten Gürtel einfassen.

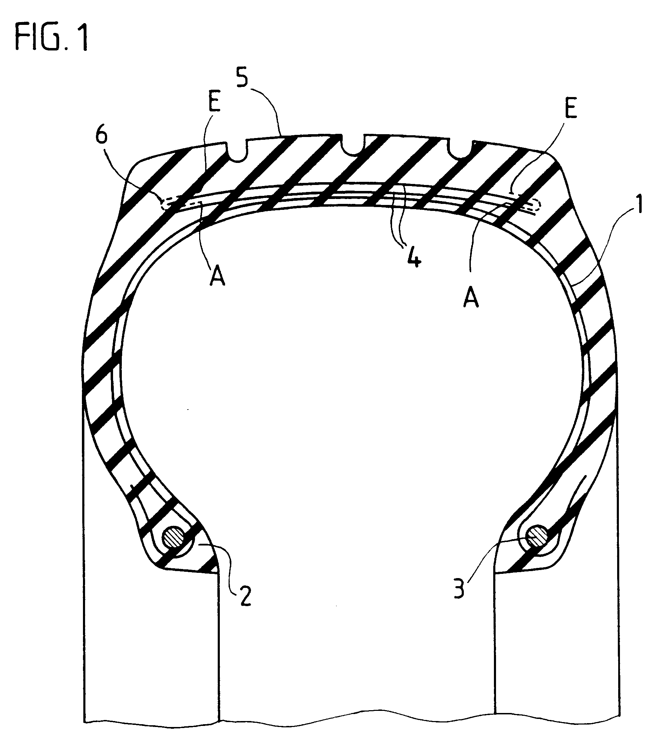

Der Reifen der Fig. 1 weist eine Radialkarkasse 1 auf, die in den Wülsten 2 durch Umschlingen zugfester Wulstkerne 3 verankert ist. Bei Bedarf kann es auch eine Diagonalkarkasse sein. Radial außen von der Karkasse 1 befindet sich ein üblicher Verstärkungsgürtel 4, der aus zwei im Kreuzverband angeordneten zugfesten, dehnungsarmen Lagen, vorzugsweise auch Stahlcord oder Aramid, besteht. In den beiden Randbereichen des Gürtels 4 befindet sich zwischen ihm und dem Laufstreifen 5 je eine Wickelbandage 6 in Form einer Kantenbandage, die darüber hinaus die Ränder der radial äußeren Gürtellage einfaßt. Zur Erzeugung des Gürtelverbandes mit den beiden Wickelbandagen 6 wird zunächst die radial innere Lage des Gürtels 4 aufgelegt. Danach beginnt man in den Punkten A mit dem Wickeln der beiden Wickelbandagen 6 von axial innen nach axial außen bis der Gürtelrand erreicht ist. Anschließend wird die zweite Stahlcordlage des Gürtels aufgelegt und danach mit dem Wickeln der beiden Wickelbandagen 6 fortgefahren, wobei man nunmehr von axial außen nach axial innen wickelt bis die Endpunkte E erreicht sind. Wenn man die Wirkung der Wickelbandagen 6 auf die Gürtelränder wünscht, reicht es aus, in axialer Richtung jeweils höchstens ein Drittel der Gürtelbreite mit der Wickelbandage 6 abzudecken.

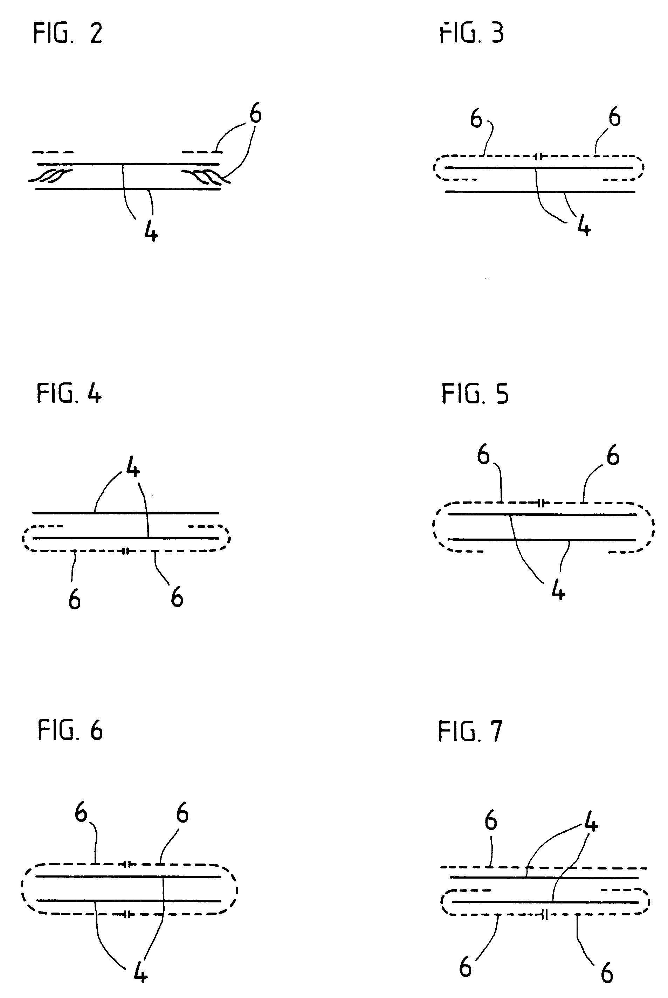

Die Anordnung des Gürtels 4 und der Wickelbandagen 6 nach Fig. 2 unterscheidet sich von der der Fig. 1 lediglich dadurch, daß die beiden Wickelbandagen 6 in ihrem radial inneren Bereich mit sich überlappenden Streifen gewickelt werden, während sie im radial äußeren Bereich dicht an dicht liegen.

Bei der Anordnung nach Fig. 3 wird bei der Erzeugung des Gürtels 4 und der Wickelbandagen 6 zunächst genauso verfahren wie beim Beispiel der Fig. 1. Der Unterschied besteht jedoch darin, daß die Wickelbandagen 6 in ihrem radial äußeren Bereich nicht bereits nach einem Drittel der axialen Breite des Gürtels enden, sondern bis zur Gürtelmitte gewickelt sind, so daß radial außen im wesentlichen eine durchgehende Lage einer Wickelbandage entsteht. Selbstverständlich kann bei Bedarf die durchgehende Lage auch in der Weise erzeugt werden, daß die beiden Enden der Wickelbandagen 6 radial außen nicht in der Gürtelmitte liegen.

Das Beispiel der Fig. 4 unterscheidet sich von dem der Fig. 1 dadurch, daß nunmehr die radial innere Lage des Gürtels 4 von zwei Wickelbandagen eingefaßt wird. Zur Erzeugung dieser Anordnung beginnt man zunächst mit dem Wickeln der beiden Wickelbandagen 6 in der Position der Gürtelmitte und wickelt nach axial außen bis die Gürtelbreite erreicht ist. Danach wird die erste Gürtellage aufgelegt und das Wickeln der beiden Bandagen 6 in der Weise vervollständigt, daß von axial außen nach axial innen gewickelt wird bis etwa ein Drittel der axialen Gürtelbreite erreicht ist. Anschließend wird die zweite Gürtellage aufgelegt.

Das Beispiel der Fig. 5 ähnelt dem der Fig. 3 jedoch mit dem Unterschied, daß statt der oberen Gürtellagen nunmehr beide Lagen des Gürtels 4 von den beiden Wickelbandagen 6 eingefaßt werden. Es wird also zunächst der radial innere Teil der beiden Wickelbandagen 6 erzeugt, danach der vollständige Gürtel aufgelegt und danach der radial äußere Teil der beiden Wickelbandagen 6 vervollständigt.

Im Beispiel der Fig. 6 wird ebenfalls der vollständige Gürtel 4 von den beiden Wickelbandagen 6 eingefaßt, wobei nunmehr jedoch mit dem Wickeln der beiden Wickelbandagen 6 in der Gürtelmitte begonnen wird. Das Ende der beiden Wickelbandagen 6 befindet sich ebenfalls in Gürtelmitte.

Das Beispiel der Fig. 7 ähnelt dem der Fig. 4. Der Unterschied besteht darin, daß zusätzlich eine weitere Wickelbandage 6 radial außen von der äußeren Gürtellage angeordnet wird, die sich über die gesamte Gürtelbreite erstreckt.

## Patentansprüche

1. Fahrzeugluftreifen mit einer Karkasse (1), die in den Wülsten (2) durch Umschlingen zugfester Wulstkerne (3) verankert ist, mit einem mehrlagigen Verstärkungsgürtel (4) und mit zumindest zwei durch Spulung streifenförmigen Materials erzeugten Wickelbandagen (6),
**dadurch gekennzeichnet,**
daß die beiden Wickelbandagen (6) die beiden Ränder von zumindest einer Gürtellage umfassen.

2. Fahrzeugluftreifen nach Anspruch 1, dadurch gekennzeichnet, daß die Streifen der Wickelbandage (6) dicht an dicht liegen.

3. Fahrzeugluftreifen nach Anspruch 1, dadurch gekennzeichnet, daß benachbarte Streifen der Wickelbandage (6) sich überlappen.

4. Fahrzeugluftreifen nach Anspruch 1, dadurch gekennzeichnet, daß die beiden Wickelbandagen (6) die Ränder der radial äußeren Gürtellage einfassen, und zwar bis zu jeweils maximal einem Drittel der Lagenbreite.

5. Fahrzeugluftreifen nach Anspruch 4, dadurch gekennzeichnet, daß die beiden Wickelbandagen (6) im radial inneren Teil mit sich überlappenden Streifen und im radial äußeren Teil mit dicht an dicht liegenden Streifen vorliegen.

6. Fahrzeuglufteifen nach Anspruch 1, dadurch gekennzeichnet, daß die beiden Wickelbandagen (6) die Ränder der radial äußeren Gürtellage einfassen, und zwar radial innen bis zu jeweils maximal einem Drittel der Gürtellagenbreite, während sie radial außen im wesentlichen eine durchgehende Lage bilden.

7. Fahrzeugluftreifen nach Anspruch 1, dadurch gekennzeichnet, daß die beiden Wickelbandagen (6) die Ränder der radial inneren Gürtellage einfassen, und zwar radial außen bis zu jeweils maximal einem Drittel der Gürtellagenbreite, während sie radial innen im wesentlichen eine durchgehende Lage bilden.

8. Fahrzeugluftreifen nach Anspruch 7, dadurch gekennzeichnet, daß sich eine weitere Wickelbandage (6) radial außen von der äußeren Gürtellage befindet.

9. Fahrzeugluftreifen nach Anspruch 1, dadurch gekennzeichnet, daß die beiden Wickelbandagen (6) die Ränder beider Lagen des Gürtels (4) einfassen, und zwar radial innen bis zu jeweils maximal einem Drittel der Gürtelbreite, während sie radial außen im wesentlichen eine durchgehende Lage bilden.

10. Fahrzeugluftreifen nach Anspruch 1, dadurch gekennzeichnet, daß die beiden Wickelbandagen (6) die Ränder beider Lagen des Gürtels (4) einfassen, und zwar derart, daß sie sowohl radial innen als auch radial außen im wesentlichen eine durchgehende Lage bilden.

## Claims

1. Pneumatic vehicle tyre, having a carcase (1), which is secured in the beads (2) by being looped around substantially inextensible bead cores (3), a multiple-ply reinforcing belt (4), and at least two wound bandages (6) produced by winding strip-like material, characterised in that the two wound bandages (6) surround the two edges of at least one belt ply.

2. Pneumatic vehicle tyre according to claim 1, characterised in that the strips of the wound bandage (6) lie close up to one another.

3. Pneumatic vehicle tyre according to claim 1, characterised in that the adjacent strips of the wound bandage (6) overlap one another.

4. Pneumatic vehicle tyre according to claim 1, characterised in that the two wound bandages (6) enclose the edges of the radially external belt ply, that is to say up to a maximum of one-third of the ply width.

5. Pneumatic vehicle tyre according to claim 4, characterised in that the two wound bandages (6) are provided with overlapping strips in the radially internal portion and are provided with strips which lie close up to one another in the radially external portion.

6. Pneumatic vehicle tyre according to claim 1, characterised in that the two wound bandages (6) enclose the edges of the radially external belt ply, that is to say radially internally up to a maximum of one-third of the belt ply width, while they substantially form a continuous ply radially externally.

7. Pneumatic vehicle tyre according to claim 1, characterised in that the two wound bandages (6) enclose the edges of the radially internal belt ply, that is to say radially externally up to a maximum of one-third of the belt ply width, while they substantially form a continuous ply radially internally.

8. Pneumatic vehicle tyre according to claim 7, characterised in that an additional wound bandage (6) is situated radially externally of the external belt ply.

9. Pneumatic vehicle tyre according to claim 1, characterised in that the two wound bandages (6) enclose the edges of both plies of the belt (4), that is to say radially internally up to a maximum of one-third of the belt width, while they substantially form a continuous ply radially externally.

10. Pneumatic vehicle tyre according to claim 1, characterised in that the two wound bandages (6) enclose the edges of both plies of the belt (4), that is to say so that they substantially form a continuous ply both radially internally and radially externally.

## Revendications

1. Bandage pneumatique pour véhicule avec une carcasse (1), qui est ancrée dans les talons (2) par le fait qu'elle embrasse des noyaux de talon résistant à la traction (3), avec une ceinture de renforcement à plusieurs couches (4) et avec au moins deux bandages enroulés (6) produits par bobinage d'une matière en forme de bande,
caractérisé en ce que les deux bandes enroulées (6) comprennent les deux bords d'au moins une couche de ceinture.

2. Bandage pneumatique pour véhicule selon la revendication 1, caractérisé en ce que les bandes du bandage enroulé (6) sont disPosées de façon serrée côte à côte.

3. Bandage pneumatique pour véhicule selon la revendication 1, caractérisé en ce que les bandes voisines du bandage enroulé (6) se recouvrent.

4. Bandage pneumatique pour véhicule selon la revendication 1, caractérisé en ce que les deux bandages enroulés (6) comprennent les bords de la couche de ceinture externe du point de vue radial, et ceci jusqu'à chaque fois au maximum un tiers de la largeur des couches.

5. Bandage pneumatique pour véhicule selon la revendication 4, caractérisé en ce que les deux bandages enroulés (6) se présentent dans la partie radiale interne avec des bandes qui se recouvrent et dans la partie radiale externe avec des bandes disposées serrées côte à côte.

6. Bandage pneumatique pour véhicule selon la revendication 1, caractérisé en ce que les deux bandages enroulés (6) comprennent les bords de la couche de ceinture radial externe, et ceci de façon radiale interne jusqu'à chaque fois au maximum un tiers de la largeur de la couche de ceinture, tandis qu'ils forment radialement vers l'extérieur essentiellement une couche complète.

7. Bandage pneumatique pour véhicule selon la revendication 1, caractérisé en ce que les deux bandages enroulés (6) comprennent les bords de la couche de ceinture interne du point de vue radial, et ceci de façon radiale vers l'extérieur jusqu'à chaque fois au maximum un tiers de la largeur des couches de ceinture, tandis qu'ils forment radialement vers l'intérieur essentiellement une couche complète.

8. Bandage pneumatique pour véhicule selon la revendication 7, caractérisé en ce qu'un autre bandage enroulé (6) se trouve de façon radiale vers l'extérieur de la couche de ceinture extérieure.

9. Bandage pneumatique pour véhicule selon la revendication 1, caractérisé en ce que les deux bandages enroulés (6) comprennent les bords des deux couches de la ceinture (4), et ceci de façon radiale à l'intérieur jusqu'à chaque fois au maximum un tiers de la largeur de la ceinture, tandis qu'ils forment radialement vers l'extérieur essentiellement une couche complète.

10. Bandage pneumatique pour véhicule selon la revendication 1, caractérisé en ce que les deux bandages enroulés (6) comprennent les bords des deux couches de la ceinture (4), et ceci de manière qu'ils forment tant vers l'intérieur que vers l'extérieur du point de vue radial essentiellement une couche complète.
